(19) Europäisches Patentamt
European Patent Office
Office européen des brevets

(11) **EP 1 311 804 B1**

(12) **EUROPÄISCHE PATENTSCHRIFT**

(45) Veröffentlichungstag und Bekanntmachung des Hinweises auf die Patenterteilung:
**08.05.2013 Patentblatt 2013/19**

(21) Anmeldenummer: **01964883.1**

(22) Anmeldetag: **08.08.2001**

(51) Int Cl.:
***G01D 3/036*** *(2006.01)*

(86) Internationale Anmeldenummer:
**PCT/DE2001/003032**

(87) Internationale Veröffentlichungsnummer:
**WO 2002/016877 (28.02.2002 Gazette 2002/09)**

(54) **SCHALTUNGSANORDNUNG UND VERFAHREN ZUR ANSTEUERUNG UND SIGNALAUSWERTUNG VON SENSOREN**

CIRCUIT ARRANGEMENT AND METHOD FOR CONTROLLING AND EVALUATING DETECTOR SIGNALS

SYSTEME DE CIRCUIT ET PROCEDE DE COMMANDE ET D'EVALUATION DE SIGNAUX DE DETECTEURS

(84) Benannte Vertragsstaaten:
**DE FR GB**

(30) Priorität: **23.08.2000 DE 10041321**
**14.05.2001 DE 10123303**

(43) Veröffentlichungstag der Anmeldung:
**21.05.2003 Patentblatt 2003/21**

(73) Patentinhaber: **Micro-Epsilon Messtechnik GmbH & Co. KG**
**94496 Ortenburg (DE)**

(72) Erfinder:
• **MEDNIKOV, Felix**
**94496 Ortenburg (DE)**
• **SELLEN, Martin**
**94496 Ortenburg (DE)**
• **WISSPEINTNER, Karl**
**94496 Ortenburg (DE)**

(74) Vertreter: **Naumann, Ulrich et al**
**Ullrich & Naumann**
**Patent- und Rechtsanwälte**
**Schneidmühlstrasse 21**
**69115 Heidelberg (DE)**

(56) Entgegenhaltungen:
**EP-A- 0 548 495      WO-A-93/20409**
**DE-A- 3 910 597      FR-A- 2 685 474**

EP 1 311 804 B1

**Beschreibung**

Die Erfindung betrifft eine Schaltungsanordnung zur Ansteuerung und Signalauswertung von parametrischen Sensoren mit komplexen Impedanzen. Die Erfindung betrifft ferner ein Verfahren zur Ansteuerung und Signalauswertung von parametrischen Sensoren mit komplexen Impedanzen.

Schaltungsanordnungen zur Ansteuerung und Signalauswertung von Sensoren sind in der Praxis seit langem bekannt. Bei den bisher bekannten Schaltungsanordnungen zur Ansteuerung und Signalauswertung von Sensoren mit komplexen Impedanzen, beispielsweise differentiellen oder nichtdifferentiellen induktiven oder kapazitiven Sensoren wie LVDT, Differentialdrosseln, Wirbelstromsensoren oder dergleichen, wird eine Brückenschaltung - im Allgemeinen eine Wechselstrombrückenschaltung - herangezogen, die von einem Sinusoszillator gespeist wird. Die Ausgangsspannung der Wechselstrombrückenschaltung wird nach Verstärkung durch einen Wechselspannungsverstärker mit einem phasenempfindlichen Demodulator gleichgerichtet und nach der erforderlichen Filterung wird die auf diese Weise gewonnene Gleichspannung, die annähernd der gemessenen Größe proportional ist, mit einem A/D-Wandler in ein entsprechendes digitales Signal umgewandelt.

Solche Schaltungsanordnungen sind insbesondere dahingehend problematisch, da sie hohe Anforderungen an alle Bauelemente der Schaltungsanordnung stellen. Beispielsweise muss der Sinusoszillator eine gute Amplituden-, Frequenz- und Phasenstabilität, der phasenempfindliche Demodulator eine gute Linearität und die Schaltungsanordnung allgemein eine besonders gute Temperatur- und Langzeitstabilität aufweisen. Ferner ist der sehr komplizierte Aufbau der Schaltungsanordnung problematisch. Diese beiden Aspekte begründen gemeinsam den oft sehr hohen Preis einer solchen Schaltungsanordnung, der selbst auch dann hoch bleibt, wenn die Schaltungsanordnung als integriertes Bauelement in großen Stückzahlen hergestellt wird.

Weiterhin sind die bekannten Schaltungsanordnungen dahingehend problematisch, da die technischen Eigenschaften oftmals durch das Auftreten von Phasenverschiebungen, Phasendrehungen und Klirrverzerrungen der Brückenausgangsspannung, die oftmals durch die komplexen Impedanzen des Sensors gegeben sind, und durch stets auftretenden Nichtlinearitäten der nicht ausgeglichenen Brückenschaltung erheblichen Einschränkungen unterliegen. So begrenzen beispielsweise durch nichtlineare Effekte im ferromagnetischen Kreis des Sensors erzeugte höhere Harmonische und die Quadraturkomponente die Auflösung der Gesamtanordnung.

Aus der DE 39 10 597 A1 ist eine Schaltungsanordnung mit einem Sensor und ein Verfahren zur Ansteuerung und Signalauswertung von Sensoren bekannt, wobei der Sensor eine Spule umfasst und wobei eine Kompensation der temperaturabhängigen Induktivitätsschwankungen der Spule erfolgt. Dabei wird ein Temperaturerfassungssensor durch den Ohm'schen Widerstand der Spule gebildet. Die Erfassung der zu messenden Größe, beispielsweise einem Weg, und der Temperatur erfolgt in zwei separaten Schaltkreisen, die von einem Mikrorechner gesteuert werden. Die aus der DE 39 10 597 A1 bekannte Schaltungsanordnung weist daher alle bereits zuvor erläuterten Nachteile auf.

Des Weiteren ist aus der EP 0 548 495 A1 ein Verfahren und eine Schaltungsanordnung zur Messung der Induktivität einer Spule bekannt, bei denen temperaturbedingte Änderungen der Induktivität kompensiert werden. Hierzu wird der Spannungsabfall an einem Messwiderstand mit einer Vergleichsspannung verglichen, woraus sich ein Kompensationspegel ableiten lässt. Im Konkreten wird die an der Spule im eingeschwungenen Zustand abfallende Spannung gemessen und zur Korrektur eine vom Ausgangssignal abgeleitete Größe verwendet. Weitere Schaltungsanordnungen und Verfahren zur Ansteuerung von Sensoren sind aus der WO 93/20409 und der FR 2 685 474 A1 bekannt.

Der vorliegenden Erfindung liegt daher die Aufgabe zugrunde, eine Schaltungsanordnung sowie ein Verfahren zur Ansteuerung und Signalauswertung von Sensoren der eingangs genannten Art anzugeben, wonach temperaturbedingte Störungen bei einer konstruktiv einfachen Ausführung minimiert bzw. weitestgehend verhindert werden.

Erfindungsgemäß wird die voranstehende Aufgabe durch eine Schaltungsanordnung zur Ansteuerung und Signalauswertung von parametrischen Sensoren mit den Merkmalen des Patentanspruchs 1 gelöst. Danach weist die in Rede stehende Schaltungsanordnung zur Ansteuerung und Signalauswertung von Sensoren mindestens einem Sensor (2) zur Erfassung mechanischer Größen und mit einer Schaltung zum gleichzeitigen Erfassen des die mechanische Größe betreffenden Messsignals, der absoluten Temperatur und der Gradienttemperatur des Sensors (2), wobei die Schaltung einen Mikroprozessor (3) umfasst, der die Abhängigkeit des Messsignals von der absoluten Temperatur und der Gradienttemperatur gleichzeitig kompensiert.

Des Weiteren ist die obige Aufgabe im Hinblick auf ein Verfahren zur Ansteuerung und Signalauswertung von parametrischen Sensoren durch ein Verfahren mit den Merkmalen des Patenanspruchs 9 gelöst, wobei durch mindestens einen Sensor (2) mechanische Größen erfasst werden, wobei mit einer Schaltung das die mechanische Größe betreffende Messsignal, die absolute Temperatur und die Gradienttemperatur des Sensors gleichzeitig erfasst werden und wobei die Schaltung einen Mikroprozessor (3) umfasst, der die Abhängigkeit des Messsignals von der absoluten Temperatur und der Gradienttemperatur gleichzeitig kompensiert.

In erfindungsgemäßer Weise ist erkannt worden, dass man in Abkehr zu der bisherigen Praxis nicht allein die Abhängigkeit des Sensors von der absoluten Temperatur kompensieren muss, sondern zusätzlich und gleichzeitig die Gradienttemperatur, um eine zufriedenstellende Temperatur- und Langzeitstabilität des Messsignals zu erreichen. Additive und multiplikative Temperaturfehler des Messsignals können somit ausgeglichen werden. Dies wird in technischer Hinsicht in besonders einfacher und raffinierter Weise dadurch erreicht, dass, vorzugsweise mittels eines Mikroprozessors oder eines Mikrorechners, diese Signale gleichzeitig erfassbar sind. Temperaturbedingte Störungen können somit weitestgehend kompensiert werden. Zudem kann derart eine besonders einfache Struktur der Schaltungsanordnung realisiert werden, was die Schaltungsanordnung besonders leicht integrierbar und somit universell einsetzbar macht und wodurch der Preis der Schaltungsanordnung gering gehalten werden kann.

In besonders vorteilhafter Weise ist die Abhängigkeit des Messsignals von der absoluten Temperatur und der Gradienttemperatur, vorzugsweise mittels des Mikroprozessors oder Mikrorechners, gleichzeitig kompensierbar. Somit wird die Schaltungsanordnung besonders einfach gehalten und wäre besonders gut für die Ansteuerung und Auswertung von komplexen Viertel-, Halb- und/oder Vollbrücken geeignet.

Der Sensor könnte mindestens eine Impedanz aufweisen. Mittels des komplexen und/oder des Ohm'schen Eingangswiderstands des Sensors könnten dann die temperaturabhängigen Änderungen der Impedanz oder Impedanzen erfassbar sein. Die Abhängigkeit des Sensors von der Temperatur ist hierbei durch die temperaturabhängige Schwankungen der Impedanz bzw. Impedanzen gegeben.

In weiter vorteilhafter Weise könnten mittels einer Spannungsquelle und/oder mindestens einem Schalter mindestens zwei Spannungen erzeugbar sein. Mittels der Spannungen könnte dann in vorteilhafter Weise der Sensor betrieben werden. Der oder die dazu notwendigen Schalter könnten hierbei steuerbare analoge Schalter sein, die mittels eines Signals direkt vom Mikroprozessor oder Mikrorechner ansteuerbar sein könnten. Das Signal könnte hierbei ein unipolares Rechtecksignal sein und eine sehr stabile Frequenz aufweisen.

Im Hinblick auf eine besonders funktionelle Ausgestaltung könnten die Spannungen zwei unipolare Wechselspannungen und eine Gleichspannung umfassen. Die Amplitude der Wechselspannung könnte dabei doppelt so groß wie Amplitude der Gleichspannung sein. Bei den unipolaren Wechselspannungen könnte es sich hierbei in besonders vorteilhafter Weise um Rechtecksignale handeln, die besonders einfach durch den oder die Schalter zu erzeugen sind. Aufwendige Stabilisierungen von Amplitude, Frequenz und Phase, die bei einer Sinusansteuerung notwendig sind, entfallen somit.

In weiter vorteilhafter Weise könnten die zwei unipolaren Wechselspannungen symmetrisch und komplementär gegen die Gleichspannung sein, wobei eine unipolare Wechselspannung kleiner als die Gleichspannung und/oder die andere unipolare Wechselspannung größer als die Gleichspannung sein könnte.

Die Spannungen könnten hierbei an den Eingängen eines Sensortreibers bzw. an den Eingängen mehrerer Sensortreiber anliegen, wobei dieser oder diese hochohmige Widerstände aufweisen könnten. Wenn der Sensor nun zwei gleiche Impedanzen aufweist, ist das Potential am Ausgang des Sensors gleich der erzeugten Gleichspannung - Referenzspannung - und der Wechselspannungsanteil ist im Wesentlichen gleich Null. Verändern sich aufgrund des Messeffekts die Impedanzen und gilt dann, dass die Impedanzen ungleich sind, so überlagert sich der Referenzspannung am Ausgang des Sensors eine Wechselspannung.

Hinsichtlich einer besonders vorteilhaften Weiterverarbeitung des Messsignals könnte das Ausgangssignal des Sensors, vorzugsweise über einen Vorverstärker, einem Synchronumformer zuführbar sein. Am Ausgang des Synchronumformers könnte dann ein Signal anliegen dessen Amplitude proportional zu den Änderungen der komplexen Impedanzen des Sensors ist und dessen Form zudem sehr nahe einer Rechtecksform ist. Dieses Rechtecksignal wäre dann sehr einfach zu demodulieren und/oder zu digitalisieren. Die Schaltungsanordnung würde somit ein sehr gutes Signal-Rausch-Verhältnis aufweisen.

Im Hinblick auf eine besonders einfache Ausführungsform könnte der Synchronumformer steuerbar sein. In besonders vorteilhafter Weise könnte der Synchronumformer hierbei direkt vom Mikroprozessor oder Mikrorechner ansteuerbar sein.

Hinsichtlich einer besonders guten Übertragung könnte das Ausgangssignal des Synchronumformers mittels eines Verstärkers, insbesondere eines programmierbaren Verstärkers, verstärkt werden.

Mittels einer Temperaturmessschaltung könnte der Wechsel- und/oder der Gleichspannungsabfall über den Widerständen des Sensortreibers messbar sein. Damit könnte mittels des Wechsel- und/oder Gleichspannungsabfalls ein Signal proportional zur Absoluttemperatur messbar sein.

Im Hinblick auf eine besonders einfache Ausgestaltung könnte das Ausgangssignal des Synchronumformers und/oder das Ausgangssignal der Temperaturmessschaltung mittels eines Multiplexers und/oder eines A/D-Wandlers, vorzugsweise durch Unterabtastung, digitalisierbar und/oder digital modulierbar sein. Der Multiplexer könnte hierbei mittels des Mikroprozessors oder Mikrorechners aktivierbar sein.

Im Rahmen der weiteren Verarbeitung des Messsignals sowie im Hinblick auf eine Temperaturkompensation könnte das Ausgangssignal des A/D-Wandlers dem Mikroprozessor oder Mikrorechner zuführbar sein.

Mittels des demodulierten Wegsignals und/oder der Absoluttemperatur und/oder der Gradienttemperatur könnte vom Mikroprozessor oder Mikrorechner ein kompensiertes Wegsignal errechenbar sein. Das kompensierte Wegsignal könnte dann mittels eines D/A-Wandlers als analoges Signal, pulsweitenmoduliertes Signal - PWM - oder mittels einer digitalen Schnittstelle zur Weiterverarbeitung ausgebbar sein. Das Signal wäre somit universell weiterverarbeitbar.

Das erfindungsgemäße Verfahren könnte insbesondere zum Betreiben einer Schaltungsanordnung gemäß den obigen Ausführungen dienen. Bei dem Verfahren ist vorteilhaft, dass das Messsignal, die absolute Temperatur und die Gradienttemperatur des Sensors, vorzugsweise mittels eines Mikroprozessors oder Mikrorechners, gleichzeitig erfasst werden und somit die temperaturabhängigen Änderungen der Impedanzen und die damit verbundenen Messfehler weitestgehend verhindert werden können. In besonders vorteilhafter Weise könnte die Abhängigkeit des Messsignals von der absoluten Temperatur und der Gradienttemperatur, vorzugsweise mittels des Mikroprozessors oder Mikrorechners, gleichzeitig kompensiert werden.

Hinsichtlich einer besonders guten Temperaturkompensation könnte der Mikroprozessor oder Mikrorechner aus den mittels eines A/D-Wandlers digitalisierten Signalen die Differenz und die Änderung des Mittels errechnen. Die Änderung des Mittels wäre dabei proportional zur Gradienttemperatur. Zusätzlich könnten mit den digitalisierten Signalen zur Verbesserung der Genauigkeit des Ausgangssignals Mittelwertbildungen durchgeführt werden.

In besonders vorteilhafter Weise könnte mittels des Ausgangssignals einer Temperaturmessschaltung, das proportional zur Absoluttemperatur ist, ein Korrekturfaktor $k_2$ berechnet werden. Die Berechnung des Korrekturfaktors $k_2$ könnte vorzugsweise mittels des Mikroprozessors oder Mikrorechners durchgeführt werden. Zusätzlich oder alternativ könnte ein weiterer Korrekturfaktor $k_1$ im Mikroprozessor oder Mikrorechner hinterlegt werden. Der Korrekturfaktor $k_1$ könnte hierbei den Sensortyp repräsentieren.

Der Mikroprozessor oder Mikrorechner könnte mittels eines Algorithmus ein Ausgangssignal errechnen, wobei das Ausgangssignal mittels der Gleichung

$$u_{aus} = [(A\text{-}B) - (u_{ref} - (A + B)/2)\, k_1]\, k_2\, (T)$$

berechnet wird.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 und dem nebengeordneten Patentanspruch 9 nachgeordneten Patentansprüche und anderseits auf die nachfolgende Erläuterung eines bevorzugten Ausführungsbeispiels einer erfindungsgemäßen Schaltungsanordnung und eines erfindungsgemäßen Verfahrens zur Ansteuerung und Signalauswertung von Sensoren anhand der Zeichnung zu verweisen. In Verbindung mit der Erläuterung des bevorzugten Ausführungsbeispiels der erfindungsgemäßen Schaltungsanordnung und des erfindungsgemäßen Verfahrens anhand der Zeichnung werden auch im Allgemeinen bevorzugte Ausgestaltungen und Weiterbildungen der Lehre erläutert. In der Zeichnung zeigt

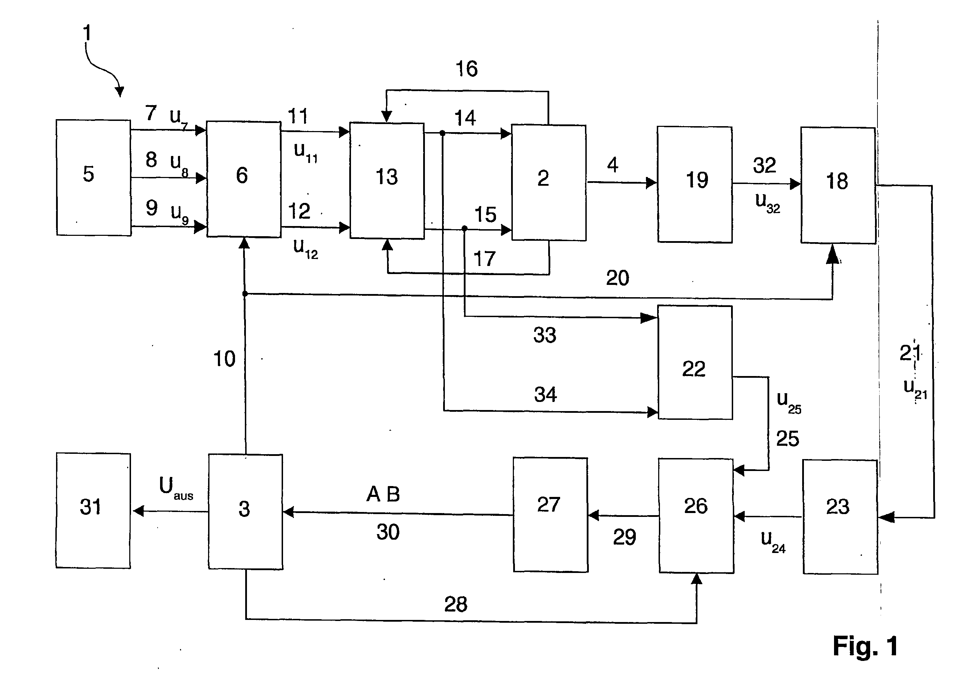

Fig. 1     in einer schematischen Darstellung, ein Ausführungsbeispiel einer erfindungsgemäßen Schaltungsanordnung zur Ansteuerung und Signalauswertung von Sensoren,

Fig. 2     in einer graphischen Darstellung, mehrere Signale an verschiedenen Punkten der erfindungsgemäßen Schaltungsanordnung und

Fig. 3     in einer schematischen Darstellung, ein Ausführungsbeispiel eines Teils der erfindungsgemäßen Schaltungsanordnung der Fig. 1.

Die Schaltungsanordnung 1 zur Ansteuerung und Signalauswertung von Sensoren umfasst einen Sensor 2 zur Erfassung mechanischer Größen. Bei dem Sensor 2 handelt es sich in diesem Ausführungsbeispiel um einen Wirbelstromsensor.

Erfindungsgemäß sind das Messsignal, die absolute Temperatur und die Gradienttemperatur des Sensors 2, vorzugsweise mittels eines Mikroprozessors 3, gleichzeitig erfassbar. Zudem ist die Abhängigkeit des Messsignals von der absoluten Temperatur und der Gradienttemperatur mittels des Mikroprozessors 3 gleichzeitig kompensierbar.

Der Sensor 2 weist zwei Impedanzen $Z_1$ und $Z_2$ auf, wobei die temperaturabhängigen Änderung der Impedanzen $Z_1$, $Z_2$ mittels des komplexen und des Ohm'schen Eingangswiderstands des Sensors 2 erfassbar sind. Das Messsignal liegt hierbei am Ausgang des Sensors 2 auf Leitung 4 an.

Mittels einer Spannungsquelle 5 und einem Schalter 6 sind drei Spannungen $u_7$, $u_8$ und $u_9$ erzeugbar. Der Schalter 6 ist hierbei ein steuerbarer analoger Schalter, der mittels eines Signals 10 direkt vom Mikroprozessor 3 angesteuert wird.

Das Signal 10, mittels dessen der analoge Schalter 6 vom Mikroprozessor 3 angesteuert wird, ist ein unipolares Rechtecksignal mit sehr stabiler Frequenz. In der ersten Halbperiode des Rechtecksignals 10 wird die Spannungsquelle 5 über den analogen Schalter 6 sowie die Leitungen 7, 11 und gleichzeitig über die Leitungen 9, 12 mit den Eingängen eines Sensortreibers 13 verbunden. In der zweiten Halbperiode des Rechtecksignals 10 wird die Spannungsquelle 5 über die Leitungen 8, 11 und 8, 12 mit denselben Eingängen des Sensortreibers 13 verbunden. Dabei handelt es sich bei den Spannungen $u_7$ und $u_9$ um unipolare Wechselspannungen und bei der Spannung $u_8$ um eine Gleichspannung. Die Amplitude der Spannungen $u_7$ und $u_9$ ist dabei doppelt so groß wie die Amplitude der Spannung $u_8$, wobei die zwei unipolaren Spannungen $u_7$ und $u_9$ symmetrisch und komplementär gegenüber der Spannung $u_8$ sind und wobei die Spannung $u_7$ größer die Spannung $u_8$ und die Spannung $u_9$ kleiner als die Spannung $u_8$ ist. Es gilt dabei der Zusammenhang $|u_8 - u_7| = |u_8 - u_9|$.

Der Sensortreiber 13 weist hochohmige Eingangswiderstände auf, um die Temperaturdrift des analogen Schalters 6 zu eliminieren.

Der Sensortreiber 13 steuert zudem über die Leitungen 14, 15, 16 und 17 den Sensor 2 an, dessen Ausgangssignal das Messsignal ist. Das Messsignal ist mittels der Leitung 4 über einen Vorverstärker 19 einem Synchronumformer 18 zuführbar.

Der Synchronumformer 18 ist steuerbar und wird über eine Leitung 20 direkt vom Mikroprozessor 3 angesteuert. Am Ausgang des Synchronumformers 18 liegt dann ein Signal $u_{21}$ an, dessen Amplitude proportional zu den Änderungen der komplexen Impedanzen $Z_1$, $Z_2$ des Sensors 2 ist und im Wesentlichen einer Rechteckspannung entspricht. Die Weiterverarbeitung des Ausgangssignals $u_{21}$ des Synchronumformers 18 erfolgt mittels eines Verstärkers 23, der in diesem Fall ein programmierbarer Verstärker - PGA - ist.

Mittels einer Temperaturmessschaltung 22 ist der Wechsel- und/oder der Gleichspannungsabfall über den Widerständen des Sensortreibers 13 messbar, wobei der Wechsel- bzw. der Gleichspannungsabfall proportional zu der Absoluttemperatur ist.

Das Ausgangssignal $u_{21}$ des Synchronumformers 18 bzw. das Ausgangssignal $u_{24}$ des programmierbaren Verstärkers 23 und das Ausgangssignal $u_{25}$ der Temperaturmessschaltung 22 wird mittels eines Multiplexers 26 und eines A/D-Wandlers 27 weiterarbeitet. Der Multiplexer 26 wird hierbei über eine Leitung 28 vom Mikroprozessor 3 angesteuert.

Das digitalisierte und demodulierte Messsignal wird dem Mikroprozessor 3 über Leitung 30 zur Berechnung eines Ausgangssignals $u_{aus}$ zugeführt. Hierbei ist zu beachten, dass, dadurch dass der Synchronumformer 18 das Messsignal derart aufbereitet hat, im Wesentlichen ein sauberes Rechtecksignal vorliegt. Somit ist eine verbesserte Auflösung erreicht und der Abtastzeitpunkt sowie die Abtastbreite können damit weitestgehend frei gewählt werden. Die Nachteile eines Sinusoszillators, nämlich die erhöhten Anforderungen an eine Amplituden-, Frequenz- und Phasenstabilität, werden durch den Synchronumformer 18 wirkungsvoll vermieden. Mittels des demodulierten Wegsignals, der Absoluttemperatur und der Gradienttemperatur wird vom Mikroprozessor 3 ein kompensiertes Wegsignal $u_{aus}$ errechnet. Das kompensierte Wegsignal $u_{aus}$ wird mittels eines D/A-Wandiers 31 als analoges Signal ausgegebenen.

Der Mikroprozessor 3 berechnet aus den im A/D-Wandler 27 digitalisierten Signalen A, B die Differenz (A - B) und die Drift des Mittels (A + B)/2. Dabei ist die Drift des Mittels (A + B)/2 proportional zur Gradienttemperatur.

Das Ausgangssignal $u_{25}$ der Temperaturmessschaltung 22, das dem Mikroprozessor 3 zugeführt worden ist und der Absoluttemperatur proportional ist, wird in einen Korrekturkoeffizienten $k_2$ (T) umgerechnet. Ein weiterer Korrekturfaktor $k_1$, der den Sensortyp repräsentiert und somit die Schaltung universell und unabhängig vom Sensortyp einsetzbar macht, ist im Mikroprozessor 3 hinterlegt. Das kompensierte Wegsignal $u_{aus}$ wird dann nach der Formel berechnet:

$$u_{aus} = [(A - B) - (u_8 - (A + B)/2)\,k_1]\,k_2\,(T)$$

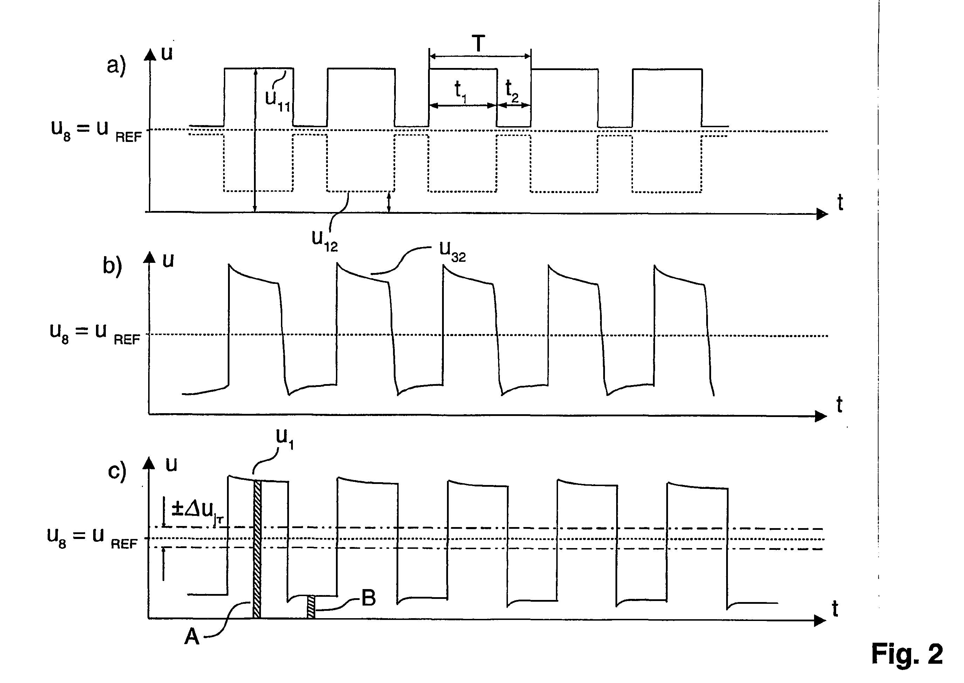

Fig. 2 zeigt eine graphische Darstellung mehrerer Signale an verschiedenen Punkte der Schaltungsanordnung. Dabei zeigt Fig. 2a die zwei komplementären unipolaren Rechteckspannungen $u_{11}$ und $u_{12}$, die gegen die Gleichspannung $u_8$ symmetrisch sind und an den Eingängen des Sensortreibers 13, sowie an den Eingängen des Sensors 2 anliegen.

Fig. 2b zeigt ein typisches Signal $u_{32}$ am Ausgang des Vorverstärkers 19 bzw. am Eingang des Synchronumformers 18.

Fig. 2c zeigt schließlich das Messsignal $u_{21}$ am Ausgang des Synchronumformers 18. Es ist dabei sehr deutlich, dass das Messsignal nunmehr ein im Wesentlichen rechteckförmiges Signal ist.

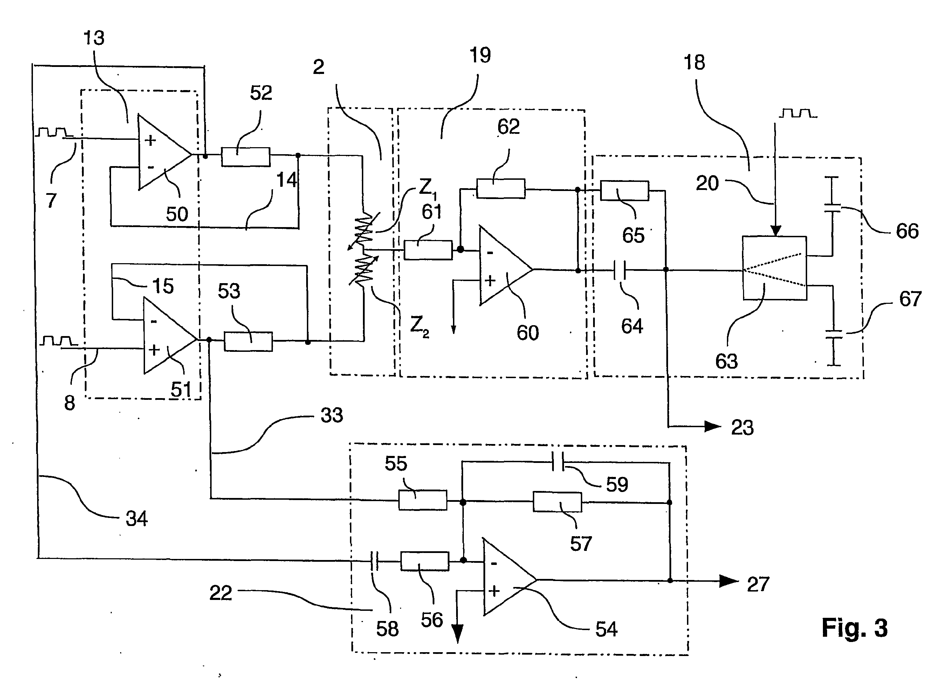

In Fig. 3 ist ein Ausführungsbeispiel eines Teils der Schaltungsanordnung 1 dargestellt. Der Sensortreiber 13 weist zwei Operationsverstärker 50 und 51 auf, deren invertierende Eingänge über die Leitungen 14 und 15 mit den Anschlüssen des Sensors 2 verschaltet sind. Die Spannungsabfälle an den Widerständen 52 und 53 sind dabei vom Eingangswiderstand des Sensors 2 abhängig.

Die Ausgänge der Operationsverstärker 50 und 51 sind über die Leitungen 33 und 34 mit der Temperaturmessschaltung 22 verbunden. Diese umfasst einen Operationsverstärker 54, die Widerstände 55, 56, 57 sowie die Kapazitäten 58 und 59. Der Ausgang des Operationsverstärkers 51 ist über die Leitung 33 und den Widerstand 55 mit dem invertierenden Eingang eines Operationsverstärkers 54 verbunden. Der Ausgang des Operationsverstärkers 50 ist mit dem invertierenden Eingang des Operationsverstärkers 54 über einen Hochpass, nämlich der Kapazität 58 und dem Widerstand 56, verbunden. Dies führt zu einer Addition der Signale am Ausgang der Operationsverstärker 50 und 51. In besonders vorteilhafter Weise ist demnach am Ausgang des Operationsverstärkers 54 nur noch ein Gleichspannungsanteil vorhanden, der proportional zur Temperaturänderung ist. Diese Art der Temperaturmessung erfolgt sehr schnell und ohne zusätzliche Tiefpassfilterung.

Für die Temperaturmessung existieren zwei Varianten, zum einen kann der Gleichspannungsabfall an den Widerständen 52 und 53 zur Temperaturmessung benutzt werden. Zum anderen kann auch der Wechselspannungsabfall an den Widerständen 52 und 53 verwendet werden, wenn die Eingangsimpedanz des Sensors unabhängig von der Position des Messobjekts ist. Dabei wird das Temperatursignal wie das Messsignal ausgewertet, beispielsweise in der Art A - B.

Das Signal am Mittelabgriff des Sensors 2 wird über den Vorverstärker 19 aufgebaut und über einen Operationsverstärker 60 sowie den Widerständen 61 und 62 dem steuerbaren Synchronumformer 18 zugeführt. Die Werte dieser Bauelemente sind von der Trägerfrequenz - dem Takt des Mikroprozessors 3 - und der Form des Ausgangssignals des Sensors 2 abhängig. Mit unterschiedlichen Kombinationen dieser Bauelemente können verschiedene Eckfrequenzen des Synchronumformers 18 eingestellt werden. Der Ausgang des Synchronumformers 18 - Leitung 21 - führt zum programmierbaren Vorverstärker 23.

Wenn der Mikroprozessor 3 die Schaltungsanordnung 1 über die Leitungen 10, 20 und 28 aktiviert, werden dem Sensor 2 komplementäre unipolare Spannungen, wie die in Fig. 2a gezeigten, zugeleitet. Dies bedeutet, dass der Sensor 2 gleichzeitig mit einer Rechteckwechselspannung und einem überlagerten Gleichspannungsanteil gespeist wird, wobei die Gleichspannungsamplitude halb so groß ist wie die der Wechselspannung.

Wenn die beiden Impedanzen $Z_1$ und $Z_2$ des Sensors 2 gleich groß sind, ist das Potential der Leitung 4 gleich der Gleichspannung $u_8$ und der Wechselspannungsanteil ist im Wesentlichen gleich 0. Verändern sich aufgrund des Messeffekts die Impedanzen $Z_1$ und $Z_2$ und gilt $Z_1 \neq Z_2$, so überlagert sich der Gleichspannung $u_8$ auf der Leitung 4 eine Wechselspannung, die wegen der komplexen Impedanzen $Z_1$, $Z_2$ eine Klirrverzerrung - wenn die Phasen von $Z_1$ und $Z_2$ nicht gleich sind - und eine Quadraturkomponente aufweist. Dies begrenzt die Dynamik und die Auflösung der Schaltungsanordnung 1. Eine deutliche Verbesserung dieser Parameter, beispielsweise bei der Auflösung Faktor 10 bis Faktor 100, wird durch den Einsatz des steuerbaren Synchronumformers 18 erreicht. Dessen Ausgangssignal hat eine Amplitude, die den Änderungen der komplexen Impedanzen $Z_1$ und $Z_2$ proportional ist, und weist annähernd eine Rechtecksform auf, wie in Fig. 2c gezeigt. Dies hat große messtechnische Vorteile. So ist die Wahl des Abtastpunkts unkritisch, hochfrequente Störungen werden gefiltert und der Nullpunkt ist einfach über die Rechteckamplitude einstellbar. Die Schaltungsanordnung 1 ist somit sehr universell verwendbar, da sie für alle Sensoren mit komplexen Impedanzen als Auswerteelektronik dienen kann.

Hinsichtlich weiterer Details wird zur Vermeidung von Wiederholungen auf die allgemeine Beschreibung verwiesen.

Schließlich sei ausdrücklich darauf hingewiesen, dass das voranstehend beschriebene Ausführungsbeispiel lediglich zur Erörterung der beanspruchten Lehre dient, diese jedoch nicht auf das Ausführungsbeispiel einträgt.

**Patentansprüche**

1. Schaltungsanordnung (1) zur Ansteuerung und Signalauswertung von parametrischen Sensoren mit komplexen Impedanzen, mit mindestens einem Sensor (2) zur Erfassung mechanischer Größen und mit einer Schaltung zum gleichzeitigen Erfassen des die mechanische Größe betreffenden Messsignals, der absoluten Temperatur und einem Wert proportional zur Drift des Mittels (A+B)/2, wobei der Sensor über einen Sensortreiber (13) mit einer Rechteckspannung beaufschlagt wird, wobei das Anregungssignal des Sensors als Messsignal aufbereitet wird und im Wesentlichen einer Rechteckspannung mit den Amplituden A und B entspricht, mit einer Amplitudendifferenz A-B und einem Mittelwert (A+B)/2 wobei die Schaltung einen Mikroprozessor (3) umfasst, der aus der Amplitudendifferenz und dem Mittelwert die Abhängigkeit des Messsignals von der absoluten Temperatur und der Drift des Mittelwerts gleichzeitig kompensiert.

2. Schaltungsanordnung nach Anspruch 1, wobei der Sensor (2) mindestens eine Impedanz ($Z_1$, $Z_2$) aufweist und wobei vorzugsweise mittels des komplexen und/oder des Ohm'schen Eingangswiderstands des Sensors (2) die temperaturabhängigen Änderungen der Impedanz ($Z_1$, $Z_2$) erfassbar sind.

3. Schaltungsanordnung nach Anspruch 1 oder 2, wobei mittels einer Spannungsquelle (5) und/oder mindestens einem Schalter (6) mindestens zwei Spannungen ($u_7$, $u_8$, $u_9$) erzeugbar sind, wobei der Schalter (6) ein steuerbarer analoger Schalter sein kann, und vorzugsweise mittels eines Signals (10) direkt vom Mikroprozessor oder Mikrorechner (3) ansteuerbar ist und wobei das Signal (10) ein unipolares Rechtecksignal sein kann.

**4.** Schaltungsanordnung nach Anspruch 4, wobei die Spannungen ($u_7$, $u_8$, $u_9$) zwei unipolare Wechselspannungen ($u_7$, $u_9$) und eine Gleichspannung ($u_8$) umfassen, wobei die Amplitude der Wechselspannungen ($u_7$, $u_9$) doppelt so groß wie die Amplitude der Gleichspannung ($u_8$) sein kann, wobei die zwei unipolaren Wechselspannungen ($u_7$, $u_9$) symmetrisch und/oder komplementär gegen die Gleichspannung ($u_8$) sein können und wobei eine unipolare Wechselspannung ($u_7$) kleiner als die Gleichspannung ($u_8$) und/oder die andere unipolare Wechselspannung ($u_9$) größer als die Gleichspannung ($u_8$) sein kann bzw. sein können.

**5.** Schaltungsanordnung nach Anspruch 3 oder 4, wobei die Spannungen ($u_7$, $u_8$, $u_9$) an einem Sensortreiber (13) anliegen und wobei der Sensortreiber (13) hochohmige Eingangswiderstände aufweisen kann.

**6.** Schaltungsanordnung nach einem der Ansprüche 1 bis 5, wobei das Ausgangssignal des Sensors (2), vorzugsweise über einen Vorverstärker (19), einem Synchronumformer (18) zuführbar ist und wobei der Synchronumformer (18) steuerbar und/oder direkt vom Mikroprozessor oder Mikrorechner (3) ansteuerbar sein kann.

**7.** Schaltungsanordnung nach Anspruch 6, wobei das Ausgangssignal ($u_{21}$) des Synchronumformers (18) mittels eines Verstärkers (23), insbesondere eines programmierbaren Verstärkers, verstärkbar ist und/oder dass mittels einer Temperaturmessschaltung (22) der Wechsel- und/oder der Gleichspannungsabfall über den Widerständen des Sensortreibers (13) messbar ist, wobei mittels des Wechsel- und/oder Gleichspannungsabfalls ein Signal proportional zur Absoluttemperatur messbar und/oder das Ausgangssignal ($u_{21}$) des Synchronumformers (18) und/oder das Ausgangssignal ($u_{25}$) der Temperaturmessschaltung (22) mittels eines Multiplexers (26) und/oder eines A/D-Wandlers (27), vorzugsweise durch Unterabtastung, digitalisierbar und/oder digital demodulierbar und/oder der Multiplexer (26) mittels des Mikroprozessors oder Mikrorechners (3) aktivierbar und/oder das Ausgangssignal ($u_{30}$) des A/D-Wandlers (27) dem Mikroprozessor oder Mikrorechner (3) zuführbar sein kann.

**8.** Schaltungsanordnung nach Anspruch 7, wobei mittels des demodulierten Ausgangssignals ($u_{21}$) des Synchronumformers (18) und/oder des demodulierten Ausgangssignals ($u_{25}$) der Temperaturmessschaltung (22) und/oder der Absoluttemperatur und/oder dem Wert zur Drift des Mittels (A+B)/2 vom Mikroprozessor oder Mikrorechner (3) ein kompensiertes Wegsignal ($u_{aus}$) errechenbar ist, wobei das kompensierte Wegsignal ($u_{aus}$) mittels des D/A-Wandlers (31) als analoges Signal, pulsweitenmoduliertes Signal oder mittels einer digitalen Schnittstelle zur Weiterverarbeitung ausgebbar sein kann.

**9.** Verfahren zur Ansteuerung und Signalauswertung von parametrischen Sensoren mit komplexen Impedanzen, zum Betreiben einer Schaltungsanordnung nach einem der Ansprüche 1 bis 8, wobei durch mindestens einen Sensor (2) mechanische Größen erfasst werden, wobei mit einer Schaltung das die mechanische Größe betreffende Messsignal, die absolute Temperatur und den Wert Drift des Mittels (A+B)/2 gleichzeitig erfasst werden und wobei die Schaltung einen Mikroprozessor (3) umfasst, der die Abhängigkeit des Messsignals von der absoluten Temperatur und dem Wert zur Drift des Mittels (A+B)/2 gleichzeitig kompensiert.

**10.** Verfahren nach Anspruch 9, wobei der Mikroprozessor oder Mikrorechner (3) aus den mittels eines A/D-Wandlers (27) digitalisierten Signalen (A, B) die Differenz (A-B) und die Änderung des Mittels ((A+B)/2) errechnet, wobei die Änderung des Mittels (A+B)/2 proportional zum Wert des Drifts des Mittels (A+B)/2 sein kann und wobei mit den digitalisierten Signalen (A, B) zur Verbesserung der Genauigkeit des Ausgangssignals ($u_{aus}$) Mittelwertbildungen durchgeführt werden können.

**11.** Verfahren nach Anspruch 9 oder 10, wobei mittels des Ausgangssignals ($u_{25}$) einer Temperaturmessschaltung (22), das proportional zur Absoluttemperatur ist, ein Korrekturfaktor $k_2(T)$ berechnet wird, wobei ein Korrekturfaktor $k_1$ im Mikroprozessor oder Mikrorechner (3) hinterlegt werden kann, wobei der Korrekturfaktor $k_1$ den Sensortyp repräsentiert werden kann und wobei der Mikroprozessor oder Mikrorechner (3) mittels eines Algorithmus ein Ausgangssignal ($u_{aus}$) berechnen kann und der Algorithmus das Ausgangssignal ($u_{aus}$) mittels

$$u_{aus} = [(A-B) - (u_8 - (A + B)/2)\, k_1]\, k_2(T)$$

berechnen kann.

**Claims**

1. Circuit arrangement (1) for the control and signal evaluation of parametric sensors having complex impedances, having at least one sensor (2) for detecting mechanical variables and having a circuit for simultaneously detecting the measurement signal relating to the mechanical variable, the absolute temperature and a value proportional to the drift of the mean (A+B)/2, the sensor being acted on by means of a sensor driver (13) having a square wave voltage, the excitation signal of the sensor being provided as a measurement signal and substantially corresponding to a square wave voltage having the amplitudes A and B, having an amplitude difference A-B and a mean value (A+B)/2, the circuit comprising a microprocessor (3) which, from the amplitude difference and the mean value, simultaneously compensates for the dependence of the measurement signal on the absolute temperature and the drift of the mean value.

2. Circuit arrangement according to claim 1, the sensor (2) having at least one impedance ($Z_1$, $Z_2$) and the temperature-dependent changes of the impedance ($Z_1$, $Z_2$) being able to be detected preferably by means of the complex and/or the ohmic input resistance of the sensor (2).

3. Circuit arrangement according to claim 1 or 2, at least two voltages ($u_7$, $u_8$, $u_9$) being able to be produced by means of a voltage source (5) and/or at least one switch (6), the switch (6) being able to be a controllable analogue switch and preferably being able to be controlled by means of a signal (10) directly by the microprocessor or microcomputer (3) and the signal (10) being able to be a unipolar square wave signal.

4. Circuit arrangement according to claim 4, the voltages ($u_7$, $u_8$, $u_9$) comprising two unipolar alternating-current voltages ($u_7$, $u_9$) and a direct-current voltage ($u_8$), the amplitude of the alternating-current voltages ($u_7$, $u_9$) being twice as large as the amplitude of the direct--current voltage ($u_8$), the two unipolar alternating-current voltages ($u_7$, $u_9$) being able to be symmetrical and/or complementary with respect to the direct-current voltage ($u_8$), and a unipolar alternating-current voltage ($u_7$) being able to be smaller than the direct-current voltage ($u_8$) and/or the other unipolar alternating-current voltage ($u_9$) being able to be greater than the direct-current voltage ($u_8$).

5. Circuit arrangement according to claim 3 or 4, the voltages ($u_7$, $u_8$, $u_9$) being present at a sensor driver (13) and the sensor driver (13) being able to have high-ohmic input resistances.

6. Circuit arrangement according to any one of claims 1 to 5, the output signal of the sensor (2) being able to be supplied to a synchronous transformer (18), preferably by means of a pre-amplifier (19), and the synchronous transformer (18) being able to be controlled and/or being able to be controlled directly by the microprocessor or microcomputer (3).

7. Circuit arrangement according to claim 6, the output signal ($u_{21}$) of the synchronous transformer (18) being able to be amplified by means of an amplifier (23), in particular a programmable amplifier and/or in that, by means of a temperature measurement circuit (22), the alternating-current voltage and/or the direct-current voltage drop can be measured by means of the resistances of the sensor driver (13), it being possible by means of the alternating-current voltage and/or the direct-current voltage drop to measure a signal proportional relative to the absolute temperature and/or the output signal ($u_{21}$) of the synchronous transformer (18) and/or the output signal ($u_{25}$) of the temperature measurement circuit (22) being able to be digitised and/or digitally demodulated by means of a multiplexer (26) and/or an A/D convertor (27), preferably by means of subsampling, and/or the multiplexer (26) being able to be activated by means of the microprocessor or microcomputer (3) and/or the output signal ($u_{30}$) of the A/D transformer (27) being able to be supplied to the microprocessor or microcomputer (3).

8. Circuit arrangement according to claim 7, a compensated path signal ($u_{aus}$) being able to be calculated by means of the demodulated output signal ($u_{21}$) of the synchronous transformer (18) and/or the demodulated output signal ($u_{25}$) of the temperature measurement circuit (22) and/or the absolute temperature and/or the value relative to the drift of the mean (A+B)/2 of the microprocessor or microcomputer (3), the compensated path signal ($u_{aus}$) being able to be output by means of the D/A convertor (31) as an analogue signal, pulse-width-modulated signal or by means of a digital interface for further processing.

9. Method for the control and signal evaluation of parametric sensors having complex impedances, for operating a circuit arrangement according to any one of claims 1 to 8, mechanical variables being detected by means of at least one sensor (2), the measurement signal relating to the mechanical variable, the absolute temperature and the value drift of the mean (A+HB/2 being detected at the same time with a circuit, and the circuit comprising a microprocessor (3) which simultaneously compensates for the dependence of the measurement signal on the absolute temperature and the value relative to the drift of the mean (A+B)/2.

10. Method according to claim 9, the microprocessor or microcomputer (3) calculating the difference (A-B) and the change of the mean ((A+B)/2 from the signals (A, B) digitised by means of an A/D convertor (27), the change of the mean (A+B)/2 being able to be proportional to the value of the drift of the mean (A+B)/2 and mean value formations being able to be carried out with the digitised signals (A, B) in order to improve the precision of the output signal ($u_{aus}$)·

11. Method according to claim 9 or 10, a correction factor $k_2(T)$ being calculated by means of the output signal ($u_{25}$) of a temperature measurement circuit (22) which is proportional to the absolute temperature, a correction factor $k_1$ being able to be stored in the microprocessor or microcomputer (3), the correction factor $k_1$ being able to represent the sensor type, and the microprocessor or microcomputer (3) being able to calculate an output signal ($u_{aus}$) by means of an algorithm and the algorithm being able to calculate the output signal ($u_{aus}$) by means of

$$u_{aus} = [(A-B) - (u_8 - (A + B)/2) k_1] k_2(T).$$

**Revendications**

1. Agencement de commutation (1) destiné à la commande et à l'analyse de signaux de capteurs paramétriques à impédances complexes, comprenant au moins un capteur (2) destiné à la détermination de grandeurs mécaniques et comprenant une commutation destinée à saisir en même temps le signal de mesure relatif à la grandeur mécanique, la température absolue et une valeur proportionnelle à la dérive de la moyenne (A+B)/2, dans lequel le capteur est activé au moyen d'une tension carrée par le biais d'un pilote de capteur (13), dans lequel le signal d'excitation du capteur est préparé en tant que signal de mesure et correspond sensiblement à une tension carrée avec les amplitudes A et B, avec une différence d'amplitude A-B et une valeur moyenne (A+B)/2, et dans lequel la commutation comprend un microprocesseur (3) qui, à partir de la différence d'amplitude et de la valeur moyenne, compense en même temps la dépendance du signal de mesure par rapport à la température absolue et à la dérive de la valeur moyenne.

2. Agencement de commutation selon la revendication 1, dans lequel le capteur (2) présente au moins une impédance ($Z_1$, $Z_2$) et dans lequel les variations de l'impédance ($Z_1$, $Z_2$) liées à la température peuvent de préférence être déterminées au moyen de la résistance d'entrée complexe et/ou ohmique du capteur (2).

3. Agencement de commutation selon la revendication 1 ou 2, dans lequel au moins deux tensions ($u_7$, $u_8$, $u_9$) peuvent être produites au moyen d'une source de tension (5) et/ou d'au moins un commutateur (6), étant entendu que le commutateur (6) peut être un commutateur analogique gouvernable, et peut de préférence être commandé directement par le microprocesseur ou le microordinateur (3) au moyen d'un signal (10), et étant entendu que le signal (10) peut être un signal carré unipolaire.

4. Agencement de commutation selon la revendication 4, dans lequel les tensions ($u_7$, $u_9$) comprennent deux tensions alternatives unipolaires ($u_7$, $u_9$) et une tension continue ($u_8$), étant entendu que l'amplitude des tensions alternatives ($u_7$, $u_9$) peut être deux fois plus grande que l'amplitude de la tension continue ($u_8$), étant entendu que les deux tensions alternatives unipolaires ($u_7$, $u_9$) peuvent être symétriques et/ou complémentaires par rapport à la tension continue ($u_8$) et étant entendu qu'une tension alternative unipolaire ($u_7$) peut être inférieure à la tension continue ($u_8$) et/ou l'autre tension alternative unipolaire ($u_9$) peut être supérieure à la tension continue ($u_8$).

5. Agencement de commutation selon la revendication 3 ou 4, dans lequel les tensions ($u_7$, $u_8$, $u_9$) sont appliquées à un pilote de capteur (13) et dans lequel le pilote de capteur (13) peut présenter des résistances d'entrée de valeur ohmique élevée.

6. Agencement de commutation selon l'une des revendications 1 à 5, dans lequel le signal de sortie du capteur (2) peut être transmis à un convertisseur synchrone (18), de préférence par le biais d'un préamplificateur (19), et le convertisseur synchrone (18) peut être gouvernable et/ou commandé directement par le microprocesseur ou le microordinateur (3).

**7.** Agencement de commutation selon la revendication 6, dans lequel le signal de sortie ($u_{21}$) du convertisseur synchrone (18) peut être amplifié au moyen d'un amplificateur (23), en particulier un amplificateur programmable, et/ou la baisse de la tension alternative et/ou continue peut être mesurée au moyen d'une commutation de mesure de la température (22) par le biais des résistances du pilote (13) du capteur, étant entendu qu'au moyen de la baisse de la tension alternative et/ou continue, un signal proportionnel à la température absolue peut être mesuré et/ou le signal de sortie ($u_{21}$) du convertisseur synchrone (18) et/ou le signal de sortie ($u_{25}$) de la commutation de mesure de la température (22) peut être numérisé et/ou démodulé numériquement au moyen d'un multiplexeur (26) et/ou d'un transducteur A/N (27), de préférence par sous-échantillonnage, et/ou le multiplexeur (26) peut être activé au moyen du microprocessus ou du microordinateur (3) et/ou le signal de sortie ($u_{30}$) du transducteur A/N (27) peut être transmis au microprocesseur ou au microordinateur (3).

**8.** Agencement de commutation selon la revendication 7, dans lequel qu'un signal de voie compensé ($u_{aus}$) peut être calculé par le microprocesseur ou le microordinateur (3) au moyen du signal de sortie démodulé ($u_{21}$) du convertisseur synchrone (18) et/ou du signal de sortie démodulé ($u_{25}$) de la commutation de mesure de la température (22) et/ou de la température absolue et/ou de la valeur relative à la dérive de la moyenne (A+B)/2, étant entendu que le signal de voie compensé ($u_{aus}$) peut être émis au moyen du transducteur N/A (31) en tant que signal analogique, signal à modulation d'impulsions en largeur ou au moyen d'une interface numérique en vue d'un traitement ultérieur.

**9.** Procédé de commande et d'analyse de signaux de capteurs paramétriques à impédances complexes destiné à opérer un agencement de commutation selon l'une des revendications 1 à 8, dans lequel des grandeurs mécaniques sont déterminées au moyen d'au moins un capteur (2), dans lequel le signal de mesure concernant la grandeur mélanique, la température absolue et la valeur de dérive de la moyenne (A+B)/2 sont déterminées en même temps avec une commutation et dans lequel la commutation comprend un microprocesseur (3) qui compense en même temps la dépendance du signal de mesure par rapport à la température absolue et à la valeur relative à la dérive de la moyenne (A+B)/2.

**10.** Procédé selon la revendication 9, dans lequel le microprocesseur ou le microordinateur (3) calcule la différence (A-B) et la variation de la moyenne ((A+B)/2) à partir des signaux (A, B) numérisés au moyen d'un transducteur A/N (27), étant entendu que la variation de la moyenne (A+B)/2 peut être proportionnelle à la valeur de la dérive de la moyenne (A+B)/2 et que des formations de valeurs moyennes peuvent être réalisées avec les signaux (A, B) numérisés afin d'améliorer la précision du signal de sortie ($u_{aus}$).

**11.** Procédé selon la revendication 9 ou 10, dans lequel un facteur de correction $k_2(T)$ est calculé au moyen du signal de sortie ($u_{25}$) d'une commutation de mesure de la température (22), qui est proportionnel à la température absolue, étant entendu qu'un facteur de correction $k_1$ peut être enregistré dans le microprocesseur ou le microordinateur (3), le facteur de correction $k_1$ pouvant représenter le type de capteur, et étant entendu que le microprocesseur ou le microordinateur (3) peut calculer un signal de sortie ($u_{aus}$) au moyen d'un algorithme et l'algorithme peut calculer le signal de sortie ($u_{aus}$) au moyen de la formule $u_{aus} = [(A-B) - (u_8 - (A + B)/2) k_1] k_2(T)$.

**Fig. 1**

EP 1 311 804 B1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3910597 A1
- EP 0548495 A1
- WO 9320409 A
- FR 2685474 A1